(19) Europäisches Patentamt
European Patent Office
Office européen des brevets

(11) Publication number: **0 063 037**
**B1**

(12) # EUROPEAN PATENT SPECIFICATION

(45) Date of publication of patent specification: **25.09.85**

(51) Int. Cl.⁴: **C 09 J 3/14,** C 08 F 22/32

(21) Application number: **82301854.4**

(22) Date of filing: **07.04.82**

(54) **Adhesive composition.**

(30) Priority: **10.04.81 JP 54631/81**

(43) Date of publication of application:
**20.10.82 Bulletin 82/42**

(45) Publication of the grant of the patent:
**25.09.85 Bulletin 85/39**

(84) Designated Contracting States:
**AT BE CH DE FR GB IT LI LU NL SE**

(56) References cited:
**US-A-4 139 693**
**US-A-4 170 585**

(73) Proprietor: **SUMITOMO CHEMICAL COMPANY, LIMITED**
**15 Kitahama 5-chome Higashi-ku**
***Osaka-shi Osaka* 541 (JP)**

(73) Proprietor: **TAOKA CHEMICAL CO., LTD**
**No. 2-11, Nishimikuni 4-chome**
**Yodogawa-ku Osaka-shi Osaka-fu (JP)**

(72) Inventor: **Nakato, Chiaki**
**3-2, Shinchujo-cho**
***Ibaraki Osaka* (JP)**
Inventor: **Shiraishi, Yoshihisa**
**1305, Matsutamoroguchi-cho**
**Tsurumi-ku (JP)**
Inventor: **Nakagawa, Kazuhiro**
**C8-408, 2-1, Takemidai**
**Suita Osaka (JP)**
Inventor: **Ohasi, Koiti**
**3-8-10, Nishiishikiri-cho**
**Higashiosaka Osaka (JP)**

(74) Representative: **Allard, Susan Joyce et al**
**BOULT, WADE & TENNANT 27 Furnival street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 063 037 B1**

**Description**

The present invention relates to an adhesive composition. More particularly, it relates to an α-cyanoacrylate compound-containing adhesive composition which has an enhanced initial adhesion strength.

α-Cyanoacrylate esters are extremely polymerizable, and they are rapidly cured by the moisture at the surface of a solid material or in the atmosphere without the use of any catalyst or heating. Because of this property, α-cyanoacrylate esters are used as instantaneous adhesive agents for various materials such as rubbers, plastics, metals and glass. However, even instantaneous adhesive agents often have an inferior initial adhesive strength on the adhesion of some materials such as wood, chrome or nickel-plated surfaces, polyesters (e.g FRP) and phenol resins and are not suitable for the quick adhesion of such materials.

U.S. Patent No. 4170585 discloses an adhesive composition comprising an alpha-cyanoacrylate and a polyethylene glycol or its ether.

U.S. Patent No. 4139693 discloses an adhesive composition comprising an alpha-cyanoacrylate ester and an aromatic polyol which bears a carboxyl group.

We have now found that the incorporation of both an aliphatic polyol or a derivative thereof or a polyester or derivative thereof and an aromatic polyol which does not contain a carboxy group into adhesive compositions comprising α-cyanoacrylate esters can enhance the initial adhesion strength without deterioration of the advantageous characteristic properties inherent in the compositions such as good storage stability and high bonding strength.

According to the present invention, there is provided an adhesive composition which comprises (A) an α-cyanoacrylate ester, (B) an aliphatic polyol or a derivative thereof or a polyether or a derivative thereof and (C) an aromatic polyol having the formula:

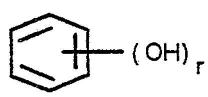

(III)

wherein r is an integer of 2 or 3 and at least two hydroxyl groups are present at adjacent positions of the ring.

The α-cyanoacrylate ester used as component (A) has the formula:

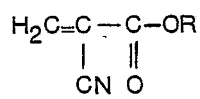

(I)

wherein R is an ester residue, particularly a substituted or unsubstituted, saturated or unsaturated, cyclic or non-cyclic hydrocarbon group such as substituted or unsubstituted alkyl, more specifically alkyl (e.g. methyl, ethyl, n-propyl, isopropyl, n-butyl, isobutyl, sec-butyl, pentyl, hexyl, octyl, ethylhexyl, dodecyl), alkoxyalkyl (e.g. methoxyethyl, ethoxyethyl), haloalkyl (e.g. chloroethyl, trifluoroethyl), phenylalkyl (e.g. benzyl), etc., substituted or unsubstituted alkenyl (e.g. allyl), substituted or unsubstituted alkynyl (e.g. propargyl), substituted or unsubstituted aryl (e.g. phenyl, tolyl) or substituted or unsubstituted cycloalkyl (e.g. cyclopentyl, cyclohexyl). Also, R may be substituted or unsubstituted, saturated or unsaturated heterocyclic group such as tetrahydrofurfuryl.

The component (B) is an aliphatic polyol or a derivative thereof or a polyether or a derivative thereof. Examples of the aliphatic polyols are alkane polyols (e.g. ethylene glycol, propylene glycol, tetramethylene glycol, hexamethylene glycol, octamethylene glycol, 3-methylpentane diol, 2,2-diethylpropane diol, 2-ethyl-1,4-butane diol, glycerol, trimethylolmethane, trimethylolethane, trimethylolpropane, 1,2,6-hexanetriol, 2,5-hexanediol), alkene polyols (e.g. polybutadiene diol), halogenated alkane polyols (e.g. chloropropylene glycol), etc. The derivatives thereof may be esters, ethers, etc., and cover specifically alkyl ethers (e.g. methylcellosolve, ethylcellosolve, ethylene glycol n-butyl ether, propylene glycol methyl ether, tetramethylene glycol propyl ether, ethylene glycol diethyl ether), aryl ethers (e.g. ethylene glycol phenyl ether), aralkyl ethers (e.g. ethylene glycol benzyl ether), alkanoic esters (e.g. ethylene glycol monoacetate, ethylene glycol monolaurate, ethylene glycol monostearate, ethylene glycol distearate, ethylcellosolve stearate, glycerol monolaurate, glycerol monostearate, sorbitan monolaurate), alkenoic esters (e.g. cellosolve acrylate, cellosolve methacrylate, cellosolve crotonate), etc.

The polyethers and their derivatives are those having the repeating units of the formula:

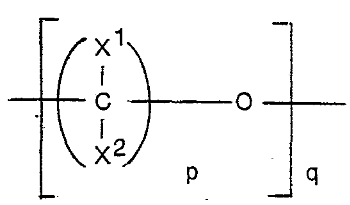

(II)

wherein $X^1$ and $X^2$ are each hydrogen, halogen, hydroxyl, alkyl, alkenyl, aryl or aralkyl, the latter four groups optionally bearing any suitable substituent thereon, p is an integer of not less than 1 and q is an integer of not less than 2. The linear chain comprising the said repeating units may have any atom or group at each of the both terminal positions. Alternatively, both ends of the linear chain may be combined to form a cyclic ring. In general, p is preferably from 2 to 6, and q is preferably from 2 to 3,000. When q is more than 10,000, the compatibility of the resulting polyether with the α-cyanoacrylate ester is inferior. Examples of the polyethers and their derivatives are formaldehyde condensates, acetaldehyde condensates, trioxane polymers, polyalkylene glycols (e.g. diethylene glycol, triethylene glycol, tetraethylene glycol, polyethylene glycol, dipropylene glycol, polypropylene glycol, polytetramethylene oxide, poly-3,3-bis(chloromethyl)-butylene oxide, poly-1,3-dioxolane, ethylene oxide-propylene oxide block polymers), polyalkylene glycol monoethers (e.g. methylcarbitol, carbitol, diethylene glycol n-butyl ether, diethylene glycol phenyl ether, diethylene glycol benzyl ether, dipropylene glycol ethyl ether, tripropylene glycol methyl ether, polyethylene glycol methyl ether, polyethylene glycol propyl ether, polyethylene glycol lauryl ether, polyethylene glycol stearyl ether, polyoxyethylene nonylphenyl ether, polyethylene glycol allyl ether), polyalkylene glycol diethers (e.g. diethylene glycol diethyl ether, diethylene glycol di-n-butyl ether, triethylene glycol dimethyl ether, tetraethylene glycol distearyl ether, polyethylene glycol dimethyl ether), polyalkylene glycol monoesters (e.g. diethylene glycol propionate, tetraethylene glycol acetate, propylene glycol n-butyrate, polyethylene glycol acetate, polyethylene glycol ethylate, polyethylene glycol laurate, polyethylene glycol cetylate, polyethylene glycol stearate, polyethylene glycol oleate, polyoxyethylene sorbitan laurate, diethylene glycol acrylate, diethylene glycol methacrylate, diethylene glycol crotonate), polyalkylene glycol diesters (e.g. diethylene glycol diacetate, diethylene glycol dipropionate, diethylene glycol diacrylate, diethylene glycol distearate, diethylene glycol dimethacrylate, tetraethylene glycol dicrotonate, polyethylene glycol dimethylate, polyethylene glycol di-n-butyrate, polyethylene glycol dilaurate, polyethylene glycol diacrylate, polyethylene glycol dimethacrylate, polyethylene glycol dicrotonate, polyethylene glycol di-α-cyanoacrylate, polyethylene glycol stearyl-methacrylate, polyethylene glycol lauryl-acrylate), polyalkylene glycol monoether monoesters (e.g. acrylates, methacrylates, crotonates or α-cyanoacrylates of glycol monoethers such as methylcarbitol, carbitol, tetraoxyethylene methyl ether, polyoxyethylene lauryl ether, polyoxyethylene nonylphenyl ether), bisphenol A-polyalkylene oxide adducts, trimethylolpropane-polyalkylene oxide adducts, glycerin-polyalkylene oxide adducts, adipic acid-polyalkylene oxide adducts, trimellitic acid-polyalkylene oxide adducts, etc. Their examples forming a cyclic ring are 18-crown-6, 15-crown-5, 18-crown-5, dithia-15-crown, dibenzo-18-crown-6, tribenzo-18-crown-6, dicyclohexyl-18-crown-6, 1.2-naptho-15-crown-5, 1.2-methylbenzo-18-crown-6, etc.

Specific examples of the aromatic polyol are catechol, pyrogallol, 1,2,4-benzenetriol, etc.

While various combinations of specific substances of the compounds (A), (B) and (C) are possible, particularly preferred is the combination of the α-cyanoacrylate ester (I) as the component (A), a polyalkyl ether compound of the formula:

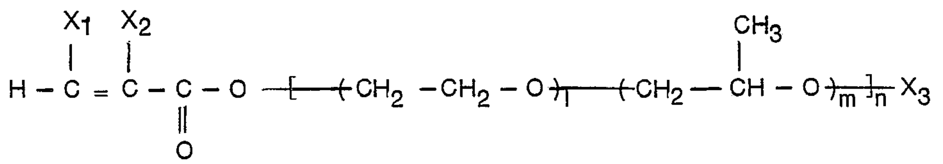

(IV)

wherein $X_1$ is a hydrogen atom or a methyl group, $X_2$ is a hydrogen atom, a methyl group or a cyano group, $X_3$ is a hydrogen atom, —R′ or —OCR″ (in which R′ and R″ are each a hydrocarbon group not containing any anion polymerizable group) but when $X_2$ is a cyano group, $X_3$ is not a hydrogen atom, l and m are each zero or a positive integer but l + m is not zero and n is a positive integer as the component (B) and pyrogallol as the component (C). A typical example of the anion polymerizable group is an ethylenically unsaturated bond.

Examples of the polyalkyl ether compound (IV), which is also generally known, are monoacrylates, monomethacrylates or monocrotonates of glycols (e.g. ethylene glycol, diethylene glycol, triethylene glycol, tetraethylene glycol, polyethylene glycol, polypropylene glycol, oxyethylene oxypropylene block polymer), monacrylates, monomethacrylates, monocrotonates or α-cyanoacrylates of glycol monoethers (e.g. methyl cellosolve, ethyl cellosolve, butyl cellosolve, methylcarbitol, tetraoxyethylene methyl ether, polyoxyethylene lauryl ether, polyoxyethylene nonylphenyl ether), acrylates, methacrylates, crotonates or α-cyanoacrylates of monoester compounds (e.g. polyoxyethylene monooleate, polyoxyethylene monostearate), etc. Among them, preferred are monoacrylates of glycol monoethers, particularly tetraoxyethylene methyl ether monoacrylate. Their molecular weights are usually not more than about 20,000.

The adhesive composition may also comprise any other additive which are conventionally incorporated into a α-cyanoacrylate ester-containing adhesive composition. Examples of such additives are a stabilizer, particularly an anionic polymerization inhibitor (e.g. sulfur dioxide, sulfonic acid, sultone) and a radical polymerization inhibitor (e.g. hydroquinone, hydroquinone monomethyl ether), a thickening agent (e.g. polymethyl methacrylate), a plasticizer, a colorant, a perfume or a solvent.

In the adhesive composition of the invention, the α-cyanoacrylate ester as the component (A) is usually contained in an amount of not less than 50% by weight, perferably of not less than 80% by weight, based on the total weight of the adhesive composition. However, this is not limitative. The proportions of the components (B) and (C) to the component (A) may be appropriately selected taking into consideration the adhesive property of the resulting composition. In general, the amount of component (B) may be from 0.05 to 20% by weight based on the weight of component (A), and the amount of component (C) may be from 0.0001 to 0.5% by weight on the same basis as above. When these amounts are below the lower limits, little improvement is achieved. When these amounts are higher than the higher limits, the curing rate and the adhesion strength of the component (A) deteriorate.

The adhesive composition of the invention may be used for the bonding of various materials. It is particularly notable that such adhesive compositions produce a remarkable initial adhesion strength for various materials, especially somewhat acidic materials such as wood, chrome or nickel-plated surfaces, polyesters and phenol resins.

Practical and presently preferred embodiments of the present invention are illustrated in the following Examples wherein % is by weight.

Examples 1 to 7 and Comparative Examples 1 to 4

An adhesive composition comprising ethyl α-cyanoacrylate as the component (A) and sulfur dioxide as an anionic polymerization inhibitor and hydroquinone as a radical polymerization inhibitor respectively in amounts of 0.002% and 0.1% based on the weight of ethyl α-cyanoacrylate was incorporated with the polyalkyl ether compound (IV) as shown in Table 1 as the component (B) and pyrogallol as the component (C) respectively in amounts as shown in Table 1 based on the weight of ethyl α-cyanoacrylate. The resultant adhesive composition was subjected to measurement of adhesion strength. The results are shown in Table 1.

For comparison, adhesion strength of the adhesive composition not incorporated with the components (B) and/or (C) was also measured, and the results are shown in Table 1 as Comparative Examples.

In these Examples, measurement of adhesion strength was effected as follows: materials (100 × 25 × 1.6—3 mm) as shown in Table 1 were bonded each other with an adhesive area of 25 × 12.5 mm and cured at 20°C under a relative humidity of 60%; after cured for 3 minutes and for 24 hours, its tensile shear strength was measured with a pulling rate of 50 mm/min; results being expressed in $kg.f/cm^2$.

TABLE 1

| Example | Component (B) | | Component (C) | | Tensile shear strength ($kg.f/cm^2$) | | | |
|---|---|---|---|---|---|---|---|---|
| | | | | | Cured for 3 minutes | | Cured for 24 hours | |
| | Kind | Amount (%) | Kind | Amount (%) | A | B | A | B |
| 1 | Tetraoxyethylene mono-methyl ether monoacrylate | 0.6 | Pyrogallol | 0.02 | 29 | 37 | At 70°C material broken | 133 |
| 2 | Methoxypolyethylene glycol monomethacrylate | 0.4 | Pyrogallol | 0.01 | 25 | 36 | At 70°C material broken | 122 |
| 3 | Methoxypolyethylene glycol monomethacrylate | 0.4 | Pyrogallol | 0.05 | 32 | 41 | At 70°C material broken | 128 |
| 4 | Polyethylene glycol mono-crotonate | 0.6 | Pyrogallol | 0.02 | 27 | 38 | At 70°C material broken | 138 |
| 5 | Octaethylene glycol mono-methacrylate | 0.4 | Pyrogallol | 0.01 | 23 | 35 | At 70°C material broken | 142 |
| 6 | Polyoxyethylene mono-oleate monoacrylate | 0.4 | Pyrogallol | 0.02 | 21 | 33 | At 70°C material broken | 120 |
| 7 | Polyoxyethylene mono-stearate monomethacrylate | 0.4 | Pyrogallol | 0.02 | 23 | 34 | At 70°C material broken | 140 |
| Com-parative 1 | – | – | – | – | 0 | 11 | At 70°C material broken | 80 |
| 2 | – | – | Pyrogallol | 0.01 | 0 | 8 | At 70°C material broken | 122 |
| 3 | Tetraoxyethylene mono-methyl ether monoacrylate | 0.6 | – | – | 11 | 22 | At 70°C material broken | 91 |
| 4 | Methoxypolyethylene glycol monomethacrylate | 0.4 | – | – | 16 | 21 | At 70°C material broken | 92 |

Materials bonded: A: Lauan/Lauan
B: Chrome plated steel/chrome plated steel

Examples 8 to 24 and Comparative Examples 5 to 7

An adhesive composition comprising the α-cyanoacrylate ester (I) as shown in Table 2 as the component (A) and sulfur dioxide as an anionic polymerization inhibitor and hydroquinone as a radical polymerization inhibitor respectively in amounts of 0.0015% and 0.05% based on the weight of the α-cyanoacrylate ester (I) was incorporated with the polyalkyl ether compound (IV) as shown in Table 2 as the component (B) and the aromatic polyol (III) as shown in Table 2 as the component (C) respectively in amounts as shown in Table 2 based on the weight of the α-cyanoacrylate ester (I). The resultant adhesive composition was subjected to measurement of adhesion strength. The results are shown in Table 2.

For comparison, adhesion strength of the adhesive composition not incorporated with the components (B) and/or (C) was also measured, and the results are shown in Table 2 as Comparative Examples.

In these Examples, measurement of adhesion strength was effected as follows: materials (100 × 25 × 1.6—3 mm) as shown in Table 2 were bonded each other with an adhesive area of 25 × 12.5 mm and cured at 20°C under a relative humidity of 60%; after cured for 3 minutes and for 24 hours, its tensile shear strength was measured with a pulling rate of 50 mm/min; results being expressed in $kg.f/cm^2$.

TABLE 2

| Example | Component (A) | Component (B) | | Component (C) | | Tensile shear strength (kg.f/cm$^2$) | | | |
|---|---|---|---|---|---|---|---|---|---|
| | | | | | | Cured for 3 minutes | | Cured for 24 hours | |
| | Kind | Kind | Amount (%) | Kind | Amount (%) | A | B | A | B |
| 8 | Methyl $\alpha$-cyano-acrylate | Polyethylene glycol monomethacrylate | 0.4 | Pyrogallol | 0.01 | 23 | 30 | At 70°C material broken | 125 |
| 9 | Methyl $\alpha$-cyano-acrylate | Tetraoxyethylene mono-methyl ether monoacrylate *) | 0.6 | Pyrogallol | 0.01 | 22 | 34 | At 70°C material broken | 129 |
| 10 | Methyl $\alpha$-cyano-acrylate | Methoxypolyethylene glycol monomethacrylate | 0.4 | Pyrogallol | 0.01 | 26 | 32 | At 70°C material broken | 127 |
| 11 | Methyl $\alpha$-cyano-acrylate | Tetraoxyethylene mono-oleate monomethacrylate | 0.4 | Pyrogallol | 0.01 | 25 | 31 | At 70°C material broken | 127 |
| 12 | Ethyl $\alpha$-cyano-acrylate | Polyethylene glycol monoacrylate | 0.4 | Pyrogallol | 0.02 | 27 | 29 | At 70°C material broken | 130 |
| 13 | Ethyl $\alpha$-cyano-acrylate | Polyethylene glycol monoacrylate *) | 0.4 | Pyrogallol | 0.02 | 26 | 28 | At 70°C material broken | 129 |
| 14 | Ethyl $\alpha$-cyano-acrylate | Polyethylene glycol monoacrylate | 0.4 | Pyrogallol | 0.03 | 28 | 31 | At 70°C material broken | 133 |
| 15 | Ethyl $\alpha$-cyano-acrylate | Polyethylene glycol monoacrylate | 0.6 | Pyrogallol | 0.03 | 32 | 38 | At 70°C material broken | 135 |
| 16 | Ethyl $\alpha$-cyano-acrylate | Polyethylene glycol mono-methyl ether monoacrylate | 0.4 | Pyrogallol | 0.03 | 33 | 39 | At 70°C material broken | 129 |
| 17 | Ethyl $\alpha$-cyano-acrylate | Polyethylene glycol mono-methyl ethyl monoacrylate | 0.4 | Catechol | 0.03 | 17 | 22 | At 70°C material broken | 108 |
| 18 | Ethyl $\alpha$-cyano-acrylate | Polyethylene glycol mono-methyl ether monoacrylate | 0.4 | 1,2,4-benzentriol | 0.03 | 12 | 18 | At 70°C material broken | 102 |
| 19 | Ethyl $\alpha$-cyano-acrylate | Tetraoxyethylene monolauryl ether monocrotonate | 0.4 | Pyrogallol | 0.02 | 26 | 32 | At 70°C material broken | 131 |
| 20 | Ethyl $\alpha$-cyano-acrylate | Polyoxyethylene mono-oleate monocyanoacrylate | 0.4 | Pyrogallol | 0.02 | 27 | 38 | At 70°C material broken | 139 |

TABLE 2 (Continued)

| Example | Component (A) |  Component (B) | | Component (C) | | Tensile shear strength ($kg_*f/cm^2$) | | | |
|---|---|---|---|---|---|---|---|---|---|
| | | | | | | Cured for 3 minutes | | Cured for 24 hours | |
| | Kind | Kind | Amount (%) | Kind | Amount (%) | A | B | A | B |
| 21 | Propyl $\alpha$-cyano-acrylate | Tetraoxyethylene mono-methyl ether monoacrylate | 0.4 | Pyrogallol | 0.03 | 18 | 22 | At 70°C material broken | 134 |
| 22 | Propyl $\alpha$-cyano-acrylate | Tetraoxyethylene mono-methyl ether monoacrylate *) | 0.4 | Pyrogallol | 0.03 | 16 | 21 | At 70°C material broken | 136 |
| 23 | Butyl $\alpha$-cyano-acrylate | Tetraoxyethylene mono-methyl ether monoacrylate | 0.4 | Pyrogallol | 0.03 | 11 | 17 | At 70°C material broken | 110 |
| 24 | Ethoxyethyl $\alpha$-cyanoacrylate | Tetraoxyethylene mono-methyl ether monoacrylate | 0.4 | Pyrogallol | 0.03 | 15 | 21 | At 70°C material broken | 100 |
| Com-parative 5 | Methyl $\alpha$-cyano-acrylate | – | – | – | – | 0 | 12 | At 70°C material broken | 85 |
| 6 | Methyl $\alpha$-cyano-acrylate | – | – | Pyrogallol | 0.01 | 0 | 10 | At 70°C material broken | 124 |
| 7 | Methyl $\alpha$-cyano acrylate | Tetraoxyethylene mono-methyl ether monoacrylate | 0.6 | – | – | 12 | 22 | At 70°C material broken | 96 |

Note: *) Thickened product containing polymethyl methacrylate in an amount of 5% by weight.

Materials bonded: A: Lauan/Lauan
B: Chrome plated steel/chrome plated steel

As understood from the results in Tables 1 and 2, the adhesive composition incorporated with the polyalkyl ether compound (IV) only is insufficient in initial adhesion strength and that incorporated with pyrogallol only is unsatisfactory in adhesion strength, while the adhesive composition incorporated with the polyalkyl ether compound (IV) and pyrrogallol produces a sufficient initial adhesion strength retaining the inherent or enhanced adhesion strength. Thus, the combined use of the polyalkyl ether compound (IV) and pyrogallol shows a synergistic effect.

Examples 25 to 28 and Comparative Examples 8 to 12

An adhesive composition comprising ethyl α-cyanoacrylate as the component (A) and sulfur dioxide as an anionic polymerization inhibitor and hydroquinone as a radical polymerization inhibitor respectively in amounts of 0.002% and 0.1% based on the weight of ethyl α-cyanoacrylate was incorporated with the polyether or its derivative having the repeating units of the formula (II) as shown in Table 3 as the component (B) and the aromatic polyol (III) as shown in Table 3 as the component (C) respectively in amounts as shown in Table 3 based on the weight of ethyl α-cyanoacrylate. The resultant adhesive composition was subjected to measurement of adhesion strength. The results are shown in Table 3.

For comparison, adhesion strength of the adhesive composition not incorporated with the components (B) and/or (C) was also measured, and the results are shown in Table 3 as Comparative Examples.

In case of polyethylene glycol distearate, it was employed in the form of solution in an equal amount of dioxane thereto. No material influence on storage stability was observed.

In these Examples, measurement of adhesion strength was effected as follows: two steel plates (100 × 25 × 1.6 mm) were bonded each other with an adhesive area of 25 × 12.5 mm and cured at 20°C under a relative humidity of 60%; after cured for 5 minutes and for 24 hours, its tensile shear strength was measured with a pulling rate of 50 mm/min; results being expressed in $kg.f/cm^2$.

TABLE 3

| Example | Component (B) | | Component (C) | | Tensile shear strength (kg.f/cm$^2$) | |
|---|---|---|---|---|---|---|
| | Kind | Amount (%) | Kind | Amount (%) | Cured for 5 minutes | Cured for 24 hours |
| 25 | Polyethylene glycol #400 | 1.0 | Pyrogallol | 0.05 | 31 | 152 |
| 26 | Polyethylene glycol monomethacrylate | 0.5 | Pyrogallol | 0.05 | 36 | 177 |
| 27 | Polyethylene glycol monomethyl ether monomethacrylate | 0.5 | Pyrogallol | 0.05 | 41 | 202 |
| 28 | Polyethylene glycol monostearate monoacrylate | 0.5 | Pyrogallol | 0.05 | 38 | 190 |
| 29 | Polyethylene glycol methoxy ether | 1.0 | Pyrogallol | 0.05 | 29 | 141 |
| 30 | Polyethylene glycol diethyl ether | 1.0 | Pyrogallol | 0.05 | 30 | 163 |
| 31 | Polyethylene glycol monolaurate | 1.0 | Pyrogallol | 0.05 | 33 | 176 |
| 32 | Polyethylene glycol distearate | 0.1 | Pyrogallol | 0.1 | 20 | 225 |
| 33 | Polyethylene glycol distearate | 0.5 | Pyrogallol | 0.05 | 41 | 203 |
| 34 | Polyethylene glycol distearate | 1.0 | Pyrogallol | 0.01 | 47 | 152 |
| 35 | Polyethylene glycol distearate | 1.0 | Catechol | 0.05 | 25 | 158 |
| 36 | Polyethylene glycol monoethyl ether monolaurate | 0.5 | Pyrogallol | 0.05 | 37 | 198 |
| 37 | Polyethylene glycol diacrylate | 0.5 | Pyrogallol | 0.05 | 16 | 197 |
| 38 | 15–Crown–5 | 0.5 | Pyrogallol | 0.05 | 23 | 190 |
| Com-parative 8 | Polyethylene glycol distearate | 0.5 | – | – | 30 | 145 |
| 9 | Polyethylene glycol monomethyl monomethacrylate | 0.5 | – | – | 29 | 146 |
| 10 | – | – | Pyrogallol | 0.05 | 5 | 224 |
| 11 | – | – | Catechol | 0.05 | 4 | 152 |
| 12 | – | – | – | – | 8 | 148 |

From the results in Table 3, it is understood that the combined used of the polyether or its derivative having the repeating units of the formula (II) and the aromatice polyol (III) in a broad range of mixing ratio is effective in enhancement of the initial adhesion strength.

**Claims**

1. An adhesive composition which comprises (A) an α-cyanoacrylate ester, (B) an aliphatic polyol or a derivative thereof or a polyether or a derivative thereof and (C) an aromatic polyol having the formula:

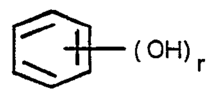

wherein r is an integer of 2 or 3 and at least two hydroxyl groups are present at adjacent positions of the ring.

2. A composition as claimed in Claim 1 wherein the α-cyanoacrylate ester has the formula:

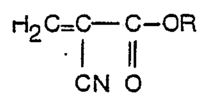

wherein R is an ester residue.

3. A composition as claimed in Claim 2 wherein the ester residue is a substituted or unsubstituted, saturated or unsaturated, cyclic or non-cyclic hydrocarbon group.

4. A composition as claimed in Claim 2, wherein the ester residue is a substitued or unsubstituted, saturated or unsaturated heterocyclic group.

5. A composition as claimed in Claim 2 wherein R is $C_1$—$C_{16}$ alkyl, $C_1$—$C_4$ alkoxy ($C_1$—$C_4$) alkyl or tetrahydrofurfuryl.

6. A composition as claimed in any one of the preceding claims wherein the aliphatic polyol or the derivative thereof is an alkane polyol, alkene polyol or a halogenated alkane polyol, or an ester or ether thereof.

7. A composition as claimed in any one of the preceding claims wherein the polyether or the derivative thereof has repeating units of the formula:

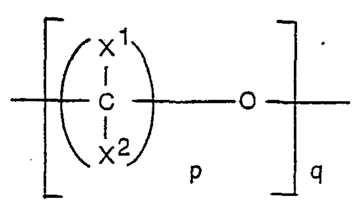

wherein $X^1$ and $X^2$ are each hydrogen, halogen, hydroxyl, alkyl, alkenyl, aryl or aralkyl, the latter four groups optionally bearing any substituent thereon, p is an integer of not less than 1 and q is an integer of not less than 2.

8. A composition as claimed in any one of the preceding claims wherein the polyether or the derivative thereof is a polyalkyl ether compound of the formula:

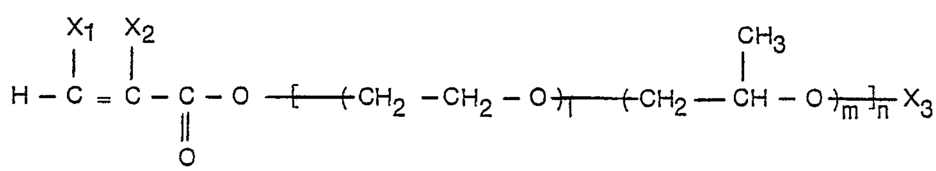

wherein $X_1$ is a hydrogen atom or a methyl group, $X_2$ is a hydrogen atom, a methyl group or a cyano group, $X_3$ is a hydrogen atom, —R′ or —OCR″ (in which R′ and R″ are each a hydrocarbon group not containing any anion polymerizable group) provided that when $X_2$ is a cyano group, $X_3$ is not a hydrogen atom, l and m are each zero or a positive integer but l + m is not zero and n is a positive integer.

9. A composition as claimed in any one of the preceding Claims wherein the aromatic polyol is pyrogallol.

10. A composition as claimed in any one of the preceding claims wherein the content of the component (A) is not less than 50% by weight based on the total weight of the composition.

11. A composition as claimed in Claim 10 wherein the content of component (A) is not less than 80% by weight based on the total weight of the composition.

12. A composition as claimed in any one of the preceding claims wherein the content of component (B) is from 0.05 to 20% by weight based on the weight of component (A).

13. A composition as claimed in any one of the preceding claims wherein the content of component (C) is from 0.0001 to 0.5% by weight based on the weight of component (A).

14. A process for preparing a composition as claimed in Claim 1 which comprises mixing together the component (A), (B) and (C) as defined therein.

15. A process as claimed in Claim 14 which is further limited by any one of the features as claimed in any one of the subsidiary claims 2 to 13.

**Revendications**

1. Composition adhésive, comprenant (A) un α-cyano-acrylate, (B) un polyol aliphatique ou un dérivé d'un tel polyol ou un polyéther ou un dérivé d'un polyéther et (C) un polyol aromatique de la formule

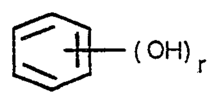

dans laquelle r est un nombre entier valant 2 ou 3 et au moins deux radicaux hydroxyle sont placés en deux positions contiguës du noyau.

2. Composition selon la revendication 1, pour laquelle le α-cyano-acrylate répond à la formule

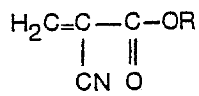

dans laquelle R représente le reste d'un ester.

3. Composition selon la revendication 2, dans laquelle le reste ester est un groupe hydrocarboné cyclique ou non cyclique, saturé ou non saturé, substitué ou non substitué.

4. Composition selon la revendication 2, dans laquelle le reste ester est un groupe hétérocyclique saturé ou non, substitué ou non.

5. Composition selon la revendication 2, dans laquelle R représente un groupe alkyle en $C_1$ à $C_{16}$, un groupe alcoxy (en $C_1$ à $C_4$)-alkyle en $C_1$ à $C_4$ ou tétrahydrofurfuryle.

6. Composition selon l'une quelconque des revendications précédentes, dans laquelle le polyol aliphatique ou le dérivé de celui-ci est un alcane-polyol, un alcène-polyol ou un halo-alcane-polyol ou un ester ou éther d'un tel polyol.

7. Composition selon l'une quelconque des revendications précédentes, dans laquelle le polyéther ou le dérivé de polyéther comprend des unités récurrentes de la formule

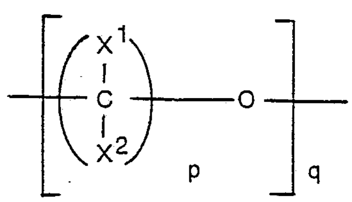

dans laquelle $X^1$ et $X^2$ désignent chacun un atome d'hydrogène ou d'halogène, un groupe hydroxyle ou un groupe alkyle, alcényle, aryle ou aralkyle, les quatre derniers groupes pouvant éventuellement être substitués, p est un nombre entier valant au moins 1 et q est un nombre entier valant au moins 2.

8. Composition selon l'une quelconque des revendications précédentes, dans laquelle le polyéther ou le dérivé de polyéther est un poly(éther d'alkyle) de la formule

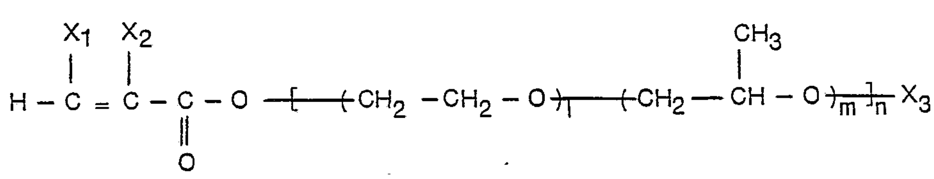

dans laquelle $X_1$ désigne un atome d'hydrogène ou un radical méthyle, $X_2$ un atome d'hydrogène, un radical méthyle ou un groupe cyano et $X_3$ un atome d'hydrogène ou un groupe —R' ou —OCR'' (R' et R'' désignant chacun un groupe hydrocarboné exempt de tout groupe polymérisable par un anion), avec la condition que lorsque $X_2$ désigne le groupe cyano, $X_3$ ne peut désigner un atome d'hydrogène, l et m valent 0 ou un nombre entier positif, étant entendu que $l + m \neq 0$, et n est un nombre entier positif.

9. Composition selon l'une quelconque des revendications précédentes, dans laquelle le polyol aromatique est le pyrogallol.

10. Composition selon l'une quelconque des revendications précédentes, dans laquelle la teneur en composant (A) représente au moins 50% du poids total de la composition.

11. Composition selon la revendication 10, dans laquelle la teneur en composant (A) représente au moins 80% du poids total de la composition.

12. Composition selon l'une quelconque des revendications précédentes, dans laquelle la teneur en composant (B) représente entre 0,05 et 20% du poids du composant (A).

13. Composition selon l'une quelconque des revendications précédentes, dans laquelle la teneur en composant (C) représente entre 0,0001 et 0,5% du poids du composant (A).

14. Procédé de préparation d'une composition selon la revendication 1, consistant à mélanger des composants (A), (B) et (C) tels que définis.

15. Procédé selon la revendication 14, répondant en outre aux caractéristiques définies dans l'une quelconque des revendications subsidiaires 2 à 13.

**Patentansprüche**

1. Klebemittelzusammensetzung, gekennzeichnet durch (A) einen α-Cyanoacrylatester, (B) ein aliphatisches Polyol oder ein Derivat davon oder einen Polyether oder ein Derivat davon und (C) ein aromatisches Polyol der Formel:

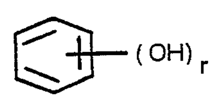

worin r eine ganze Zahl von 2 oder 3 ist und mindestens zwei Hydroxylgruppen in benachbarten Stellungen an dem Ring vorhanden sind.

2. Zusammensetzung nach Anspruch 1, dadurch gekennzeichnet, dass der α-Cyanoacrylatester der Formel:

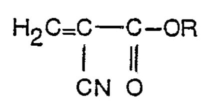

worin R ein Esterrest ist, entspricht.

3. Zusammensetzung nach Anspruch 2, dadurch gekennzeichnet, dass der Esterrest eine substituierte oder unsubstituierte, gesättigte oder ungesättigte, cyclische oder nicht cyclische Kohlenwasserstoffgruppe ist.

4. Zusammensetzung nach Anspruch 2, dadurch gekennzeichnet, dass der Esterrest eine substituierte oder unsubstituierte, gesättigte oder ungesättigte heterocyclische Gruppe ist.

5. Zusammensetzung nach Anspruch 2, dadurch gekennzeichnet, dass R Alkyl mit 1 bis 16 Kohlenstoffatomen, Alkoxyalkyl mit 1 bis 4 Kohlenstoffatomen im Alkoxyrest und 1 bis 4 Kohlenstoffatomen im Alkylrest oder Tetrahydrofurfuryl ist.

6. Zusammensetzung nach irgendeinem der vorangehenden Ansprüche, dadurch gekennzeichnet, dass das aliphatische Polyol oder das Derivat davon ein Alkanpolyol, Alkenpolyol oder ein halogeniertes Alkanpolyol oder ein Ester oder Ether davon ist.

7. Zusammensetzung nach irgendeinem der vorangehenden Ansprüche, dadurch gekennzeichnet, dass der Polyether oder das Derivat davon Struktureinheiten der Formel:

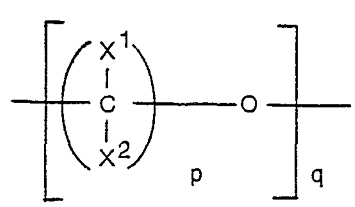

hat, worin $X^1$ und $X^2$ jeweils Wasserstoff, Halogen, Hydroxyl, Alkyl, Alkenyl, Aryl oder Aralkyl sind, wobei die zuletzt genannten vier Gruppen gegebenenfalls einen beliebigen Substituenten tragen, p eine ganze Zahl von nicht weniger als 1 ist und q eine ganze Zahl von nicht weniger als 2 ist.

8. Zusammensetzung nach irgendeinem der vorangehenden Ansprüche, dadurch gekennzeichnet, dass der Polyether oder das Derivat davon eine Polyalkyletherverbindung der Formel:

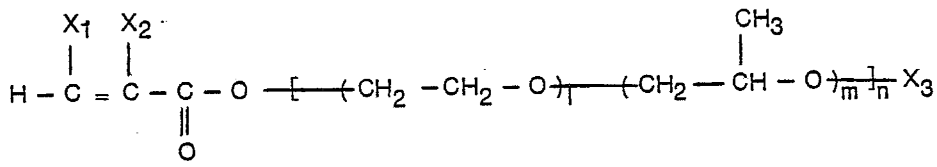

ist, worin $X_1$ ein Wasserstoffatom oder eine Methylgruppe ist, $X_2$ ein Wasserstoffatom, eine Methylgruppe oder eine Cyanogruppe ist, $X_3$ ein Wasserstoffatom, —R' oder —OCR'' ist (worin R' und R'' jeweils eine Kohlenwasserstoffgruppe sind, die keinerlei anionisch polymerisierbare Gruppe enthält), vorausgesetzt, dass, wenn $X_2$ eine Cyanogruppe ist, $X_3$ kein Wasserstoffatom ist, l und m jeweils 0 oder eine positive ganze Zahl sind, aber l + m nicht gleich 0 ist und n eine positive ganze Zahl ist.

9. Zusammensetzung nach irgendeinem der vorangehenden Ansprüche, dadurch gekennzeichnet, dass das aromatische Polyol Pyrogallol ist.

10. Zusammensetzung nach irgendeinem der vorangehenden Ansprüche, dadurch gekennzeichnet, dass der Gehalt an der Komponente (A) nicht weniger als 50 Gew.-%, bezogen auf das Gesamtgewicht der Zusammensetzung, beträgt.

11. Zusammensetzung nach Anspruch 10, dadurch gekennzeichnet, dass der Gehalt an Komponente (A) nicht weniger als 80 Gew.-%, bezogen auf das Gesamtgewicht der Zusammensetzung, beträgt.

12. Zusammensetzung nach irgendeinem der vorangehenden Ansprüche, dadurch gekennzeichnet, dass der Gehalt an Komponente (B) 0,05 bis 20 Gew.-%, bezogen auf das Gewicht der Komponente (A), beträgt.

13. Zusammensetzung nach irgendeinem der vorangehenden Ansprüche, dadurch gekennzeichnet, dass der Gehalt an Komponente (C) 0,0001 bis 0,5 Gew.-%, bezogen auf das Gewicht der Komponente (A), beträgt.

14. Verfahren zur Herstellung einer Zusammensetzung nach Anspruch 1, dadurch gekennzeichnet, dass man die darin definierten Komponenten (A), (B) und (C) zusammen mischt.

15. Verfahren nach Anspruch 14, dadurch gekennzeichnet, dass es weiter durch irgendeines der Merkmale, die in irgendeinem der abhängigen Ansprüche 2 bis 13 beansprucht sind, eingeschränkt ist.